# EUROPEAN PATENT SPECIFICATION

(11) **EP 2 855 972 B1**
(45) Date of publication and mention of the grant of the patent: **18.07.2018**
(21) Application number: 13793115.0
(22) Date of filing: 21.05.2013
(51) Int. Cl.: F16G 11/00, B65H 69/06, E02D 15/08, D07B 7/16, E21B 41/00

(54) **BRAIDED TERMINATION FOR FIBER SUBSEA UMBILICAL LINE**
GEFLOCHTENES ENDSTÜCK FÜR EINE FASERNABELSCHNUR UNTER WASSER
EMBOUT TRESSÉ POUR UNE LIGNE OMBILICALE SOUS-MARINE À FIBRE

(30) Priority: 24.05.2012 US 201261651020 P
(43) Date of publication of application: 08.04.2015
(73) Proprietor: Gregg Marine, Inc., Moss Landing, CA 95039 (US); Drake, Charles, Moss Landing, CA 95039 (US)
(72) Inventor: DRAKE, Charles, Moss Landing, CA 95039 (US)
(74) Representative: Harrison IP Limited
(86) International application number: PCT/US2013/042023
(87) International publication number: WO 2013/177164

(56) References cited:
- EP-A2- 0 481 724
- WO-A2-2011/138610
- GB-A- 2 332 946
- US-A- 2 112 281
- US-A- 2 711 439
- US-A- 3 932 697
- US-A- 4 058 049
- US-A- 4 225 172
- US-A- 4 225 172
- US-A1- 2011 052 314
- US-A1- 2011 227 753
- US-B1- 6 257 162

## Description

### Background

This disclosure relates to means to terminate a synthetic fiber strength member in a subsea umbilical line to provide a high strength lifting connection between the umbilical line and remotely operated seabed equipment.

Umbilical lines known in the art for subsea equipment, including remotely operated vehicles (ROVs), seabed drill rigs, and trenching systems include steel-jacketed umbilical cable, wherein outer windings of steel wire are disposed on the exterior of electrical and/or optical conductors. The steel wires form a strength member for lifting loads through the water column using the umbilical cable. Such cables may be terminated in a "bullet" using a curable potting material that becomes solid and thereby locks the steel wires into the bullet. Bullets using curable potting material are also commonly to terminate umbilical cables that use synthetic fiber for the strength member, but due to the different physical properties of certain types of fiber when compared to steel, such terminations usually fail at less than 60% of the actual breaking strength of the fiber strength member. It is possible to use more fiber in the strength member to increase the breaking strength of terminations known in the art, however, more fiber increases the weight of the umbilical cable, thus limiting the depth to which the umbilical cable may be deployed. GB2332946 describes a method for coupling a fiber strength member umbilical cable to a subsea equipment load transfer device using a kelum grip. US4225172 describes kelum grips. What is needed is a stronger termination for fiber strength member umbilical cables that does not require increasing the breaking strength of the strength member itself by adding material thereto.

### Summary

In one aspect, a braiding process is used to weave a high-strength synthetic fiber harness into a terminating end of an umbilical cable, resulting in a termination which may exceeds 90% of the umbilical cable breaking strength.

Other aspects and advantages of the will be apparent from the description and claims which follow.

### Brief Description of the Drawings

FIG. 1 shows components of an example subsea umbilical termination.
FIG. 2 shows an example of braiding a termination on the umbilical cable.
FIGS 3A through 3D shows element of an example termination braiding process.
FIG. 4 shows an example termination fixture coupled to an end of the example umbilical cable.
FIG. 5 shows an example bullet type umbilical lifting connection.
FIG. 6 shows an example subsea apparatus frame lifting connection.

### Detailed Description

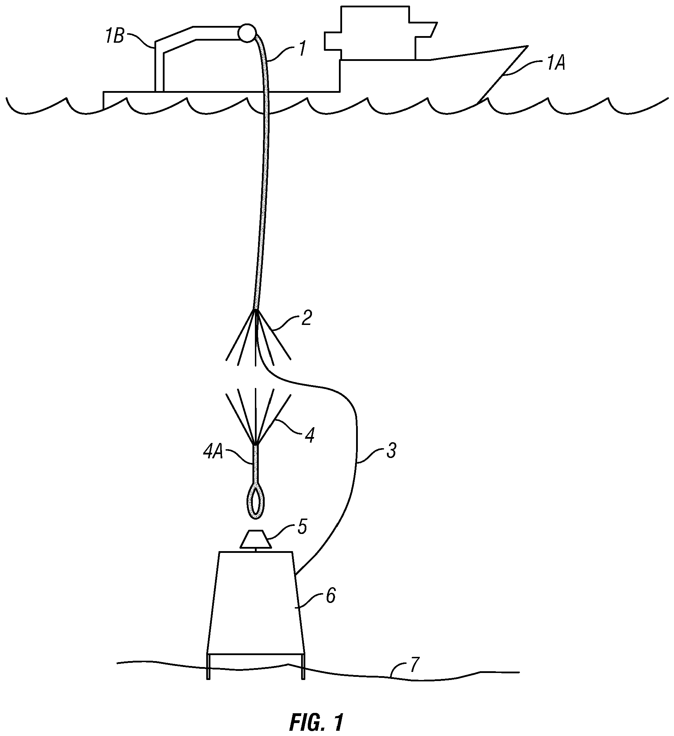

An overview of example components of an umbilical termination is shown in FIG. 1. An umbilical cable 1, which may include fiber (e.g., synthetic fiber) disposed about insulated electrical and/or optical conductors extends into water from a vessel 1A born crane 1B or launch and recovery system (LARS) of any type known in the art. The umbilical cable 1 may have an inner core 3 (e.g., electrical and/or optical conductors) and an outer, or strength core (not shown separately) made of fiber such as those sold, as nonlimiting examples, under the trademarks KEVLAR (which is a registered trademark of E. I. du Pont de Nemours and Company, 1007 Market Street, Wilmington DE 19898 or VECTRAN, which is a registered trademark of Kuraray Co., Ltd.,1621, Sakazu, Kurashiki City, Okayama Prefecture, Japan . When cut and stripped of its outer jacket (not shown separately), the strength fibers 2 are revealed. These strength fibers 2 carry the load of subsea equipment 6 to and from the surface when deploying or retrieving the subsea equipment 6. The inner core 3 of the umbilical 1 may include, as explained above, insulated electrical conductor wires and/or fiber optic cables for power and control of the subsea equipment 6. A harness 4A made of high strength synthetic fibers 4 may be connected to the umbilical 1 by a braiding process. The braided harness 4A may be attached to the subsea equipment 6 using a lifting connector 5, examples of which will be further explained below.

The subsea equipment 6 may be connected to the inner core 3 of the umbilical 1 for power and control, and the equipment 6 may be raised and lowered to the water bottom or seabed 7 with the weight carried by the harness 4A as it is coupled to the lifting connector 5 on the subsea equipment 6.

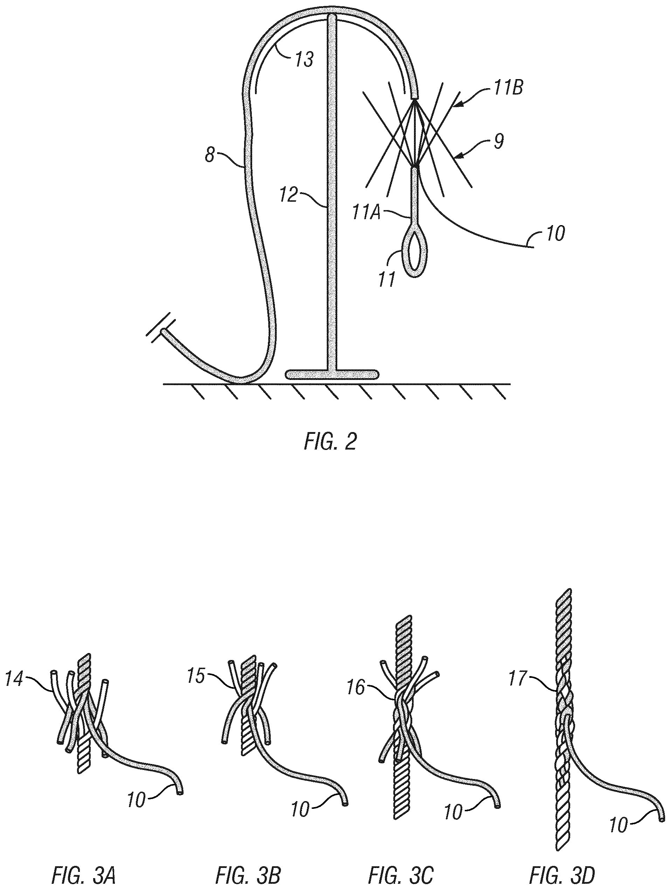

Referring to FIG. 2, in order to make the termination, the umbilical, shown at 8 in FIG. 2, may be cut at a selected location after being disposed on a suitable fixture 13 on a stand 12, and the outer jacket is stripped off to reveal the strength fibers 9, which may be separated into bundles for braiding. The umbilical fiber bundles and harness bundles, also shown at 9, may be aligned in preparation for braiding. The inner core 10 of the umbilical 8 is brought through the center of the braiding area.

The braiding harness has at least one lifting loop 11 which, when attached to the subsea equipment (e.g., connector 5 in FIG. 1) will transfer the load from the equipment (6 in FIG. 1) to the umbilical 8. The lifting loop 11 may be pre-formed prior to attachment to the umbilical 8 by looping a length of fiber, which may be similar in configuration to the fibers that form the jacket of the umbilical 8, and braiding the ends thereof to form a closed loop as shown with a selected length extension 11A. The extension 11A may have its fibers exposed, as shown at 11B, for braiding to the exposed fibers 9 at the end of the umbilical cable 8. Depending on the type of connection between the lifting loop 11 and the subsea equipment (6 in FIG. 1), the lifting loop 11 may be formed first and then engaged with a suitable component of the subsea equipment (6 in FIG. 1), or may be looped around a suitable termination component of the subsea equipment prior to braiding the lifting loop 11 to form a closed loop. Pre-forming as shown in FIG. 2 may be used advantageously in some examples to have a ready termination for coupling to the subsea equipment (6 in FIG. 1).

In FIG. 3A, the fiber bundles 14, made of the umbilical strength fibers (2 in FIG. 1; 9 in FIG. 2) and harness fibers (4 in FIG. 1; 11B in FIG. 2) are brought together and interlaced. The fiber bundles of the umbilical and harness are woven into each other above and below an initial attachment point 15 as shown in FIG. 3B. Braiding proceeds to a pre-determined length (axial distance 16 from the initial attachment point 15) in order to obtain a selected breaking strength as shown in FIG. 3C. Excess fiber 17 may be trimmed and tucked into the braided length (16 in FIG. 3C) as shown in FIG. 3D, completing the connection of the harness (11 in FIG. 2) to the umbilical (8 in FIG. 2). The core of the umbilical is shown at 10 in each of FIGS. 3A through 3D.

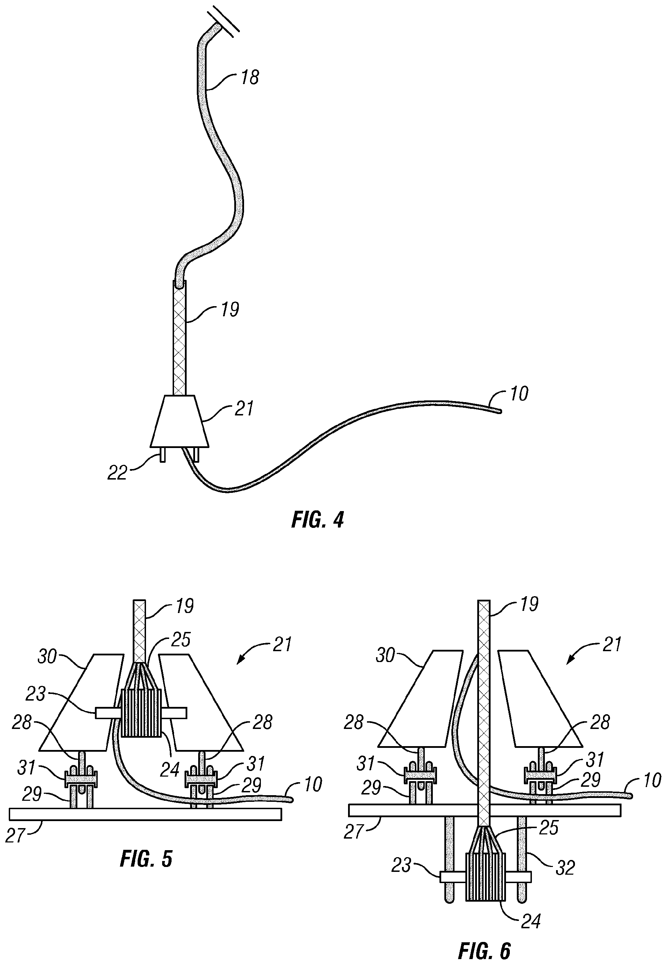

In FIG. 4, the umbilical, shown at 18 and prepared as described with reference to FIGS. 2 and 3A-D, may be removed from the braiding frame (13 in FIG. 2) and may then be extended to a subsea equipment lifting point 21, which may include lifting tabs 22.

The braided section 19 of the umbilical 18 may be fed into a lifting "bullet" system 21 which, depending upon the selected configuration, may either act as the termination point for the umbilical (FIG. 5) or may be non-load bearing (FIG. 6).

Still with reference to FIG. 4, the inner core 10 of the umbilical 18 may be led from the attachment point and may be connected to the subsea equipment (6 in FIG. 1) to provide power and control as explained above. In FIG. 5, the lifting bullet (21 in FIG. 4) may be connected to the subsea equipment, explained below. Lifting tabs 22 may secure the lifting bullet 21 to the equipment (6 in FIG. 1).

In FIG. 5, a load transfer device may include a pin 23 secured to a load transfer element, e.g. a lifting sheave 25 into the interior of a lifting bullet 30. The lifting sheave 25 may have multiple grooves 24 to support multiple loops of the lifting harness. The strength fibers of the lifting harness may be divided into multiple loops to distribute the lifting load across the lifting sheave 25. The inner core 10 of the umbilical (18 in FIG. 4) is led from the attachment point and connected, e.g., through a suitable pressure proof connector, to the subsea equipment (6 in FIG. 1) to provide power and control. A load-bearing frame 27 of the subsea equipment (6 in FIG. 1) may serve as the attachment point for the bullet 30. Tabs 28 on the bottom of the bullet 30 may attach with a pin 31 to corresponding tabs 29 on the subsea equipment load bearing frame 27. The lifting bullet 30 takes the load transferred by the umbilical termination and transmits it to the subsea equipment frame 27 via the attachment tabs 28. The braided section 19 of the subsea umbilical termination transmits the lifting force from the umbilical termination to the umbilical (18 in FIG. 4).

In another example shown in FIG. 6, a pin 23 secures the lifting sheave 25 to termination support brackets 32. The lifting sheave 25 as in the previous example, may have multiple grooves 24 to support multiple loops of the lifting harness (18 in FIG. 4). Also as in the previous example, the lifting harness may be divided into multiple loops to distribute the lifting load across the lifting sheave. 25 As in the previous example, the inner core 10 of the umbilical may be led from the attachment point and connected to the subsea equipment to provide power and control. The load-bearing frame 27 of the subsea equipment (6 in FIG. 1) serves as the attachment point for the bullet 30. Tabs 28 on the bottom of the bullet 30 attach with a pin 31 to corresponding tabs 29 on the subsea equipment load-bearing frame 27. The lifting bullet 30 takes the subsea equipment load, when the bullet is locked into a launch and recovery system, and transmits it to the subsea equipment frame via the attachment tabs 28, 29. The braided section 19 of the subsea umbilical transmits the lifting force from the umbilical termination to the umbilical (18 in FIG. 4). The termination support brackets 32 transfer the load to the subsea equipment load-bearing frame 27.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A method for coupling a fiber strength member umbilical cable (8) to a subsea equipment load transfer device, **characterized in that** the method comprises:
separating fibers (9) of the strength member for a selected axial distance at an end of the umbilical cable (8);
forming at least one fiber loop (11) around a load transfer element of the load transfer device;
weaving ends (11B) of the fiber forming the at least one fiber loop (11) into the separated fibers (9) of the end of the umbilical cable (8), a length of the woven ends from an initial attachment point (15) selected to provide a connection having a selected breaking strength.

2. The method of claim 1 wherein the load transfer element comprises a lifting sheave (25) having a plurality of grooves (24), each groove (24) having a corresponding fiber loop (11) formed therearound.

3. The method of claim 2 wherein the load transfer element is coupled to a lifting bullet (30), the lifting bullet (30) attached to a load bearing frame (27).

4. The method of claim 2 wherein the load transfer element is coupled directly to a load bearing frame (27) to transfer load therefrom.

5. The method of claim 1 wherein the fibers (9) of the strength member are separated such that a length of a central core (10) of the umbilical cable (8) is extensible to a connector on the subsea equipment.

6. The method of claim 5 wherein the central core (10) provides power and control to the subsea equipment.

## Patentansprüche

1. Verfahren zum Kuppeln eines Versorgungskabels (8) mit einem Faserverstärkungselement an eine Lastübertragungseinrichtung für eine Unterwasserausrüstung, **dadurch gekennzeichnet, dass** das Verfahren umfasst: Auftrennen von Fasern (9) des Verstärkungselements für einen gewählten axialen Abstand an einem Ende des Versorgungskabels (8);
Bilden mindestens einer Faserschlaufe (11) um ein Lastübertragungselement der Lastübertragungseinrichtung herum;
Einflechten von Faserenden (11B), die die mindestens eine Faserschlaufe (11) bilden, in die getrennten Fasern (9) des Endes des Versorgungskabels (8), wobei eine Länge der geflochtenen Enden von einem Anfangsbefestigungspunkt (15), der gewählt wird, eine Verbindung bereitzustellen, eine gewählte Bruchfestigkeit aufweist.

2. Verfahren nach Anspruch 1, wobei das Lastübertragungselement eine Hebescheibe (25) mit einer Vielzahl von Rillen (24) umfasst, wobei jede Rille (24) eine dort herum gebildete entsprechende Faserschlaufe (11) aufweist.

3. Verfahren nach Anspruch 2, wobei das Lastübertragungselement an einen Hebebehälter (30) gekuppelt wird, wobei der Hebebehälter (30) mit einem Lasttragrahmen (27) verbunden wird.

4. Verfahren nach Anspruch 2, wobei das Lastübertragungselement direkt an einen Lasttragrahmen (27) gekuppelt wird, um von dort Last zu übertragen.

5. Verfahren nach Anspruch 1, wobei die Fasern (9) des Verstärkungselements so getrennt werden, dass eine Länge eines Zentralkerns (10) des Versorgungskabels (8) zu einem Stutzen auf der Unterwasserausrüstung ausdehnbar ist.

6. Verfahren nach Anspruch 5, wobei der Zentralkern (10) eine Leistung und Steuerung für die Unterwasserausrüstung bereitstellt.

## Revendications

1. Procédé d'accouplement d'un câble ombilical d'élément de résistance à fibre (8) à un dispositif de transfert de charge d'équipement sous-marin, **caractérisé en ce que** ledit procédé comprend : la séparation des fibres (9) de l'élément de résistance sur une distance axiale sélectionnée à une extrémité du câble ombilical (8) ; la formation d'au moins une boucle de fibre (11) autour d'un élément de transfert de charge du dispositif de transfert de charge ;
le tissage des extrémités (11B) de la fibre formant la au moins une boucle de fibre (11) dans les fibres séparées (9) de l'extrémité du câble ombilical (8), une longueur des extrémités tissées à partir d'un point de fixation initial (15) sélectionné pour fournir une raccord possédant une résistance à la rupture sélectionnée.

2. Procédé selon la revendication 1, ledit élément de transfert de charge comprenant une poulie de levage (25) possédant une pluralité de rainures (24), chaque rainure (24) possédant une boucle de fibre (11) correspondante formée autour de celle-ci.

3. Procédé selon la revendication 2, ledit élément de transfert de charge étant accouplé à une coiffe de levage (30), la coiffe de levage (30) étant fixée à un bâti de support de charge (27).

4. Procédé selon la revendication 2, ledit élément de transfert de charge étant accouplé directement à un bâti de support de charge (27) afin de transférer une charge à celui-ci.

5. Procédé selon la revendication 1, lesdites fibres (9) de l'élément de résistance étant séparées de sorte qu'une longueur d'une âme centrale (10) du câble ombilical (8) puisse se prolonger jusqu'à un raccord sur l'équipement sous-marin.

6. Procédé selon la revendication 5, ladite âme centrale (10) délivrant une puissance et une commande à l'équipement sous-marin.
